# EUROPÄISCHE PATENTSCHRIFT

(11) **EP 0 543 133 B1**
(45) Veröffentlichungstag und Bekanntmachung des Hinweises auf die Patenterteilung: **16.04.1997**
(21) Anmeldenummer: 92117264.9
(22) Anmeldetag: 09.10.1992
(51) Int. Cl.: C02F 11/12, F26B 7/00

(54) **Verfahren und Vorrichtung zur Behandlung eines zu einem Dickschlamm entwässerten Klärschlammes**
Process and installation for treating thickened sewage sludge
Procédé et appareillage pour le traitement de la boue d'épuration épaissie

(30) Priorität: 19.11.1991 DE 4138036
(43) Veröffentlichungstag der Anmeldung: 26.05.1993
(73) Patentinhaber: WALTHER & CIE. AKTIENGESELLSCHAFT, D-51069 Köln (DE)
(72) Erfinder: Belting, Karl-Wilhelm, W-4150 Krefeld (DE)

(56) Entgegenhaltungen:
- EP-A- 0 396 852
- EP-A- 0 485 721
- GB-A- 1 513 651
- TASK FORCE ON THERMAL DESTRUCTION 'SLUDGE INCINERATION: THERMAL DESTRUCTION OF RESIDUES' 1992 , WATER ENVIRONMENT FEDERATION , ALEXANDRIA, US
- PATENT ABSTRACTS OF JAPAN vol. 9, no. 286 (M-429)(2009) 13. November 1985

## Beschreibung

Die Erfindung betrifft ein Verfahren zur Behandlung eines zu einem Dickschlamm entwässerten Klärschlammes, der mit einem getrockneten Klärschlamm zu einer Mischfeuchte zwischen 55 und 70 % TS gemischt und auf eine Endfeuchte über 80 % TS getrocknet ist.

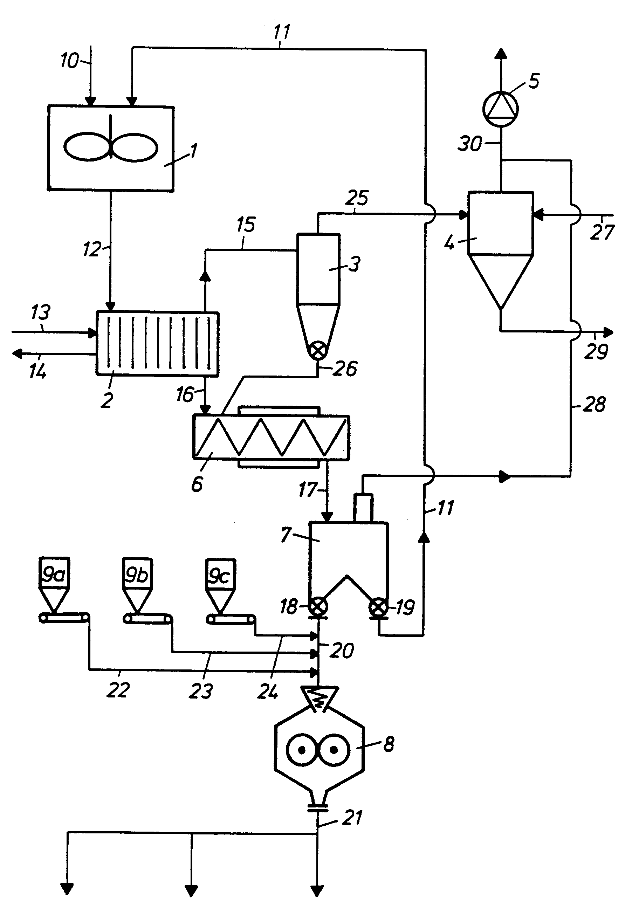

Ein derartiges Verfahren ist in der Zeitschrift "Aufbereitungstechnik", 1988, Seite 247, Bild 3, dargestellt und näher beschrieben. Bei diesem älteren Verfahren wird der getrocknete Klärschlamm über eine Siebstation geführt, mit dem Ziel, die Unterfraktionen (Puder) auszusieben und dem Mischer zuzuleiten, zum Zweck der Abmischung des Dickschlammes und gleichzeitig zur Aufgranulierung. Bekanntermaßen hat der Klärschlamm fasrige und haarige Bestandteile, wodurch sich solche Siebstationen leicht zusetzen. Des weiteren gehört zu dieser Siebstation eine entsprechende Fördertechnik und selbstverständlich Stäubzwischenbunker zur Aufnahme der abgesiebten Fraktionen und Wiedereinschleusung in die jeweilige Prozeßstufe. Demzufolge fallen hohe Investitionen und die damit einhergehenden Betriebs- und Wartungskosten an.

Bei einem weiteren Verfahren ist es bekannt (DE 39 43 476 C1), einen vorgetrockneten Klärschlamm einer Granuliereinrichtung zuzuführen. Es ist bekanntermaßen außerordentlich schwierig, mit einem nicht definierten Rohstoff, wie es beispielsweise Klärschlamm ist, ein konstantes Granulat mit einer definierten Körnungslinie aufzubereiten.

Der Erfindung liegt die Aufgabe zugrunde, ein Verfahren zu schaffen, mit dem die Nachteile der bekannten Verfahren vermieden und die Verwertung und Entsorgung eines Klärschlammes verbessert werden. Diese Aufgabe wird durch die Merkmale des Anspruchs 1 gelöst.

Mit dem erfindungsgemäßen Verfahren wird ein Mischprodukt hergestellt, das eine sichere Abtrocknung des Klärschlammes oberhalb der Leimphase ermöglicht. Es ist bekannt, daß die spezifische Leistung eines indirekt beheizten Trockners stark abhängig ist von der Körnung des zu trocknenden Produktes. Für Klärschlamm beispielsweise bedeutet dies, daß bei feinen Körnungen gemäß der Erfindung die spezifische Wasserverdampfung bei ca. 10 bis 15 kg/m²h liegt. Bei gröberen Fraktionen sinkt diese auf Werte zwischen 8 und 10 kg/m²h ab. Damit ergibt sich erfindungsgemäß der weitere Vorteil, daß der Trockner mit allen sich daraus herleitenden Vorteilen, wie Investitionskostenminderung, Energiekostenminderung, etc. erheblich kleiner ausgelegt werden kann. Dies bedeutet, daß das erfindungsgemäße Verfahren einschließlich der apparativen Ausstattung die Investitionen mit den Betriebs- und Wartungskosten verbessert. Der zur Durchführung des erfindungsgemäßen Verfahrens erhebliche Anlagenteil kann günstiger gestaltet werden, weil der notwendige Stahlbau und die dazu erforderlichen Gebäude entfallen können.

Versuche haben gezeigt, daß sich getrockneter Klärschlamm ohne Zugabe von Bindemittel auf die gewünschten Körnungen kompaktieren und brikettieren läßt. Je nach Entsorgungsart, muß eine unterschiedliche Stückgröße eingestellt werden. Diese kann durch entsprechende Gestaltung der Brikettieranlage leicht realisiert werden. Durch die entsprechende dosierte Zugabe von Additiven läßt sich die Endproduktqualität auf die gewählte Entsorgungstechnologie einstellen.

Gemäß der Erfindung wird der abgekühlte Klärschlamm in zwei vorherbestimmbare Mengenströme aufgeteilt, von denen einer dem Dickschlamm zugeführt und der andere kompaktiert oder brikettiert wird.

Zur Einstellung der beiden Mengenströme dient ein Zwischenbunker. Der erste Mengenstrom, bestimmt für die Abmischung des Dickschlammes, wird entsprechend dosiert aus dem Bunker abgezogen und einem Mischer zugeleitet. Der zweite Fertigproduktstrom, entsprechend der im Dickschlamm enthaltenen Feststoffmasse, wird aus diesem Bunker entnommen und einer Brikettieranlage aufgegeben. In dieser Brikettieranlage wird der getrocknete Klärschlamm gemäß den Anforderungsspezifikationen der weitergehenden Entsorgung umgeformt. Gleichzeitig können Additive aus Vorlagesilos mengenproportional zudosiert zum Fertigproduktstrom, in die Brikettpresse eingebracht werden, so daß sich ein homogenes , staubfreies Produkt ergibt. Die Eigenschaften des Endproduktes können gemäß dem erfindungsgemäßen Verfahren so eingestellt werden daß sie den gewünschten Anforderungen entsprechen.

Die bei der Trocknung entstehenden Wasserdampfbrüden werden gemeinsam mit einer kleinen Menge Falschluft einem Entstauber zugeleitet. In diesem wird mitgerissener Staub abgeschieden und einer Kühlschnecke aufgegeben, in der der getrocknete Klärschlamm gekühlt wird. Die weitestgehend vom Staub befreiten Trocknerbrüden werden dann einem Kondensator zugeführt. In diesem wird der kondensierbare Wasserdampfanteil durch das Einspritzen von Wasser kondensiert. Das ablaufende Brüdenkondensat wird wieder der Kläranlage zugeführt. Der nicht kondensierbare Inertgasanteil wird über einen Ventilator einer Desodorierung zugeführt.

In Abhängigkeit der Schwermetallfrachten einerseits, sowie der Belastungen des Klärschlammes durch mitgebrachte organische Bestandteile andererseits, wird der Düngemitteleinsatz limitiert. Für die Fälle, wo von der Ausgangsanalyse ein Düngemitteleinsatz möglich ist, wird der Klärschlamm durch die dosierte Zugabe von Zuschlagsstoffen, die die N-, P- und K-Komponenten beinhalten, zu einem hochwertigen Dünger aufbereitet. Durch Wahl der entsprechenden Matrizen der Brikettier- und/oder Kompaktieranlage kann ein definierter Festkörper hergestellt werden. Neben den zugegebenen N-, P- und K-Düngerbestandteile wird darüber hinaus der vom Klärschlamm mitgebrachte Düngerkomplex und auch der organische Anteil bodenverbessernd wirksam. Ein solch kompaktierter Klärschlamm kann leicht abgesackt werden und mit den üblichen Gerätschaften, wie sie auch für anorganische Düngemittel verwandt werden, gehändelt, gelagert und ausgebracht werden.

Die Mitverbrennung von getrocknetem Klärschlamm in Müllverbrennungsanlagen bietet sich aus den verschiedensten Gesichtspunkten an. Einerseits ist der Heizwert des getrockneten Klärschlammes zur Abstützung der Verbrennung interessant, insbesondere unter den neuen Gesichtspunkten einer sicheren Verbrennungstemperatur im Freeboard oberhalb des Müllrostes von 850° C, die zwei Sekunden lang gehalten werden muß und den tendenziell niedriger werdenden Heizwerten des zur Verbrennung kommenden Mülls durch Vorselektierung. Wichtig bei der Verbrennung des getrockneten und kompaktierten Klärschlammes ist allerdings die Tatsache, daß dieser in einer Struktur vorliegen sollte, die eine sichere Verbrennung mit hohem Ausbrand auf dem Rost ermöglicht. Dies gewinnt um so mehr an Bedeutung, als der organische Anteil in der Bettasche kleinstmöglich gehalten werden muß und darüber hinaus auch der organische Anteil in der Flugasche auf absolut kleinste Werte gehalten werden muß. Ausgehend von diesen Anforderungsspezifikationen ist es notwendig, einen kompaktierten Klärschlamm in definierter Körnung zu haben, die den vorgenannten Anforderungen entspricht. Es muß allerdings beachtet werden, daß der getrocknete Klärschlamm von der Trocknungsanlage bis zum Aufgabebunker in der Müllverbrennungsanlage einige mechanische Belastungen durch die notwendigen Förderelemente und Siloanlagen erfährt, wodurch sich leicht Abrieb = Staub ergibt, der Nachteile in der Verbrennung hat.

Es ist bekannt, daß sich Klärschlämme, auch wenn Sie von der gleichen Kläranlage kommen, in Abhängigkeit der Schwankungen, ausgehend von den Einleitern in die Kläranlage, unterschiedlich gut granulieren läßt. Ausgehend von diesen Schwankungen stellen sich auch Schwankungen in dem Endproduktgranulat und der Granulatfestigkeit ein für den Fall, daß nach der bekannten älteren Verfahrensweise das Produkt vor der Trocknung granuliert wird und anschließend nur noch das Aufteilen in Unterkorn und Staub einerseits und Grobgranulat andererseits durch Siebmaschinen erfolgt.

Das erfindungsgemäße Verfahren durch gezielte Kompaktierung oder Brikettierung, eliminiert die vorstehend genannten Nachteile und erbringt grundsätzlich ein definiertes, strukturiertes Produkt konstanter Körnung und Festigkeit. Durch produktgerechte Kompaktierung ohne Zugabe von Bindemitteln, ergibt sich ein gut brennbares und händelbares Produkt. Für den Fall, daß man eine primärseitige Schwefeleinbindung während der Verbrennung erreichen möchte, kann dem Produkt Kalziumcarbonat oder Kalziumhydroxyd, entsprechend dem für die Schadgaseinbindung notwendigen Molverhältnis CA/S, zugegeben werden.

Ausgehend vom Heizwert des getrockneten und kompaktierten Klärschlammes kann dieser ebenfalls in Zement-, Asphalt- oder allgemeine Energieerzeugungsanlagen aufgegeben werden. Ein definiert brikettiertes Produkt wird in diesem Falle in Containern oder Big Bagsden Anlagen zugestellt, dort gelagert und entsprechend der Feuerungsart unvermahlen oder auch vermahlen aufgegeben. Hierdurch kann primär Energie substituiert werden, sowie der anorganische Anteil bei Zement- und Asphaltanlagen in das Endprodukt auslaugefest eingebunden werden.

Es sind spezielle Festbettvergasungsanlagen für die Vergasung von stückigen, organischen Materialien entwickelt worden. Diese Vergasungstechnologien verlangen ein definiertes stückiges Ausgangsprodukt, wie es durch die Brikettierung von Klärschlamm hergestellt werden kann. Es soll hier noch einmal darauf aufmerksam gemacht werden, daß durch Wahl der Brikettiermatrizen oder durch Austausch derselben, jede beliebige Brikettgröße und Form hergestellt werden kann. Durch die Trocknung des Klärschlammes mit anschließender Kompaktierung auf die notwendige Stückgröße ist es somit möglich, den organischen Anteil in diesen Festbettvergasungseinrichtungen in Biogas umzusetzen. Dieses kann dann beispielsweise durch umweltfreundliche Verbrennung zur Energieerzeugung für die Beheizung des Klärschlammtrockners herangezogen werden.

Es wird seit längerer Zeit darüber diskutiert, daß man den getrockneten Klärschlamm durch Mitverbrennung in Kohlekraftwerken rückstandslos und umweltfreundlich entsorgen kann. Bedingt durch die Tatsache, daß die Kläranlagen und somit der Klärschlammanfall nur in wenigen Fällen in der Nachbarschaft großer Kohle gefeuerter Kraftwerke anfällt, muß der Klärschlamm transportgerecht, lager- und dosiergerecht aufbereitet werden. Für die Lagerung und den Transport, sowie insgesamt für das Händling ist es notwendig, daß keine Staubfraktionen vorhanden sind. Durch Staub werden sowohl die Umwelt belastet als auch sicherheitstechnische Probleme und somit Kosten für entsprechende Anlagenteile erforderlich. Das brikettierte, trockene Klärschlammprodukt kann in normalen Containern, wie sie auch für die Lagerung und den Transport von Abraum, Abfall etc. benutzt werden, transportiert und in normalen Stahlsilos gelagert werden. Die brikettierte Form des Klärschlammes hat in Verbindung mit der Kohlemitverbrennung keinen Nachteil, da in der im Kraftwerk vorhandenen Mahlanlage für die Aufmahlung der Kohle in die gewünschten Fraktionen auch der Klärschlamm mitvermahlen werden kann. Im Allgemeinen wird das Mengenverhältnis Klärschlamm zu Kohle nie einen Wert von > als 20 Gew.-% überschreiten, wodurch sich für die gesamte Kraftwerkstechnologie keine Nachteile ergeben. Bei der Verbrennung in Schmelzkammerfeuerungen hingegen ergibt sich der Vorteil, daß sich der anorganische Anteil des Klärschlamms im Schmelzfluß der Kohlenasche einbinden läßt. In dieser Aschematrix sind dann ebenfalls die Schadstoffe des Klärschlammes nicht in eloierbarer Form eingebunden.

Für den Fall, daß der getrocknete Klärschlamm über eine Deponie entsorgt werden soll, ist es notwendig dafür Sorge zu tragen, daß die maximale Einbaudichte einerseits bei hoher Standfestigkeit der Deponie (Scherkraft) andererseits sichergestellt wird. Dies kann man unter anderem dadurch erreichen, daß man eine spezielle Körnungskennlinie für den kompaktierten Klärschlamm aufbaut. Durch entsprechende Gestaltung der Brikettmatrizen läßt sich gezielt ein definiertes Kornband einstellen.

Ein Ausführungsbeispiel als Vorrichtung zur Durchführung des erfindungsgemäßen Verfahrens ist in einer Zeichnung schematich dargestellt und wird nachfolgend beschrieben.

Der entwässerte Dickschlamm wird über eine Leitung 10 einem Mischer 1 zugeführt, dem gleichzeitig mittels einer Leitung 11 aus einem Zwischenbunker 7 getrockneter Schlamm zugegeben wird, um damit eine notwendige Mischfeuchte zu erreichen. Der getrocknete, feinpudrige Klärschlamm wird mengenproportional dem Dickschlamm zugegeben. Die Mischung wird so eingestellt, daß eine sichere Mischfeuchte erzielt wird, die oberhalb der Leimphase des speziellen Klärschlammes liegt. Das Mischprodukt wird dann über eine Leitung 12 einem indirekt beheizten Trockner 2 zugeführt, der über eine Dampfleitung 13 beheizt wird. Mit der Leitung 14 wird das Kondensat abgeführt. In dem indirekt beheizten Trockner 2 wird das feinpudrig abgemischte Klärschlammprodukt auf die gewünschte Endfeuchte von > 80 % TS abgetrocknet. Das getrocknete Feingranulat wird mit einer Temperatur zwischen 100° C und 135° C mittels der Leitung 16 aus dem Trockner 2 entnommen und in einen indirekt wassergekühlten Kühler 6, beispielsweise eine Kühlschnecke, auf eine Temperatur von < 90° C vorzugsweise < 70° C abgekühlt. Das getrocknete und gekühlte Klärschlammprodukt wird dann über eine Leitung 17 einem Zwischenbunker 7 zugeführt, der mit zwei Auslässen 18 und 19 versehen ist. Von dem Auslaß 19 zweigt die Leitung 11 zum Mischer 1 ab.

Das im Zwischenbunker 7 abgelegte, getrocknete und gekühlte Schlammprodukt wird über die beiden Auslässe 18 und 19 in zwei Mengenströme aufgeteilt. Der bei 19 abgezogene Mengenstrom bestimmt die Abmischung des Dickschlammes und wird dosiert dem Mischer 1 zugeleitet. Aus 18 wird der zweite Produktstrom, entsprechend der im Dickschlamm enthaltenen Feststoffmasse, entnommen und einer Kompaktierungsanlage 8 zugeleitet. Im Ausführungsbeispiel handelt es sich um eine Zwei-Wälzen-Brikettierpresse, der der getrocknete Klärschlamm, gemäß den Anforderungsspezifikationen der weitergehenden Entsorgung mittels der Leitung 20 zugeführt und somit zu einem homogenen staubfreien Produkt geformt. Über eine Leitung 21 wird das kompaktierte Produkt weiteren Verwendungszwecken zugeführt.

Die bei der Trocknung im Trockner 2 entstehenden Wasserdampfbrüden werden gemeinsam mit einer kleinen Menge Falschluft über eine Leitung 15 einem Entstauber 3 zugeleitet. In diesem wird mitgerissener Staub über eine Leitung 26 abgeschieden und dem Kühler 6 zugeführt.

Weitgehend vom Staub befreiten Trocknerbrüden werden über eine Leitung 25 einem Kondensator 4 zugeführt. In diesem wird der kondensierbare Wasserdampfanteil durch Einspritzen von Wasser 20 mittels der Leitung 27 kondensiert. Das entstehende Brüdenkondensat wird mittels einer Leitung 29 zur Kläranlage zurückgeführt. Der nicht kondensierbare Inertgasanteil wird über eine Leitung 30 abgezogen und mittels eines Ventilators 5 einer nicht dargestellten Desodorierung zugeführt. Weiterhin ist eine vom Zwischenbunker 7 ausgehende Leitung 28 in die Leitung 30 eingeführt.

Damit dem zu kompaktierenden Schlamm Additive zugeführt werden können, sind einzelne Bunker 9a, 9b und 9c für die entsprechenden Additive vorgesehen, die über Leitungen 22 bis 24 mit der Leitung 20 verbunden sind und somit dem zu kompaktierenden Schlamm zugemischt werden können.

## Patentansprüche

1. Verfahren zur Behandlung eines zu einem Dickschlamm entwässerten Klärschlammes, der mit einem getrockneten Klärschlamm zu einer Mischfeuchte zwischen 55 und 70 % TS gemischt und auf eine Endfeuchte über 80 % TS getrocknet wird, dadurch gekennzeichnet, daß der zu einem Feingranulat indirekt getrocknete mit einer Temperatur zwischen 100 und 135° C dem Trockner entnommene Klärschlamm auf eine Temperatur unter 90° C, vorzugsweise unter 70° C, abgekühlt und anschließend der abgekühlte Klärschlamm in zwei vorherbestimmbare Mengenströme aufgeteilt wird, von denen einer dem Dickschlamm zugeführt und der andere kompaktiert und/oder brikettiert wird.

2. Verfahren nach Anspruch 1, dadurch gekennzeichnet, daß dem zu kompaktierenden Mengenstrom vor der Kompaktierung ein oder mehrere Additive (e) zugemischt wird.

3. Verfahren nach Anspruch 1, dadurch gekennzeichnet, daß die bei der Trocknung des Klärschlammes entstehenden Brüden mit einer kleinen Menge Falschluft entstaubt und die vom Staub befreiten Trocknerbrüden einem Kondensator zugeführt werden, in dem der kondensierbare Wasserdampfanteil durch Einspritzen von Wasser oder Dickschlamm kondensiert wird.

4. Verfahren nach Anspruch 3, dadurch gekennzeichnet, daß der bei der Entstaubung anfallende Staub dem getrockneten Schlamm zugegeben wird.

5. Verfahren nach den Ansprüchen 3 und 4, dadurch gekennzeichnet, daß das entstehende Brüdenkondensat der Kläranlage und der nicht kondensierbare Inertgasanteil einer Desodorierung zugeführt wird.

6. Verfahren nach Anspruch 1, dadurch gekennzeichnet, daß die Kompaktier- und/oder Brikettieranlage zur Herstellung unterschiedlicher Formkörper mit unterschiedlichen Matrizen betrieben wird.

7. Verfahren nach den Ansprüchen 2 und 6, dadurch gekennzeichnet, daß zur Verwendung des kompaktierten Klärschlammes als Düngemittel dem gekühlten Klärschlamm vor der Brikettierung/Kompaktierung Zuschlagsstoffe zugegeben werden, die N-, P- und K-Komponenten enthalten.

8. Verfahren nach den Ansprüchen 2 und 6 dadurch gekennzeichnet, daß zur Verwendung des kompaktierten Klärschlammes als Mitverbrennung in einer Müllverbrennungsanlage dem gekühlten Klärschlamm Kalziumkarbonat oder Kalziumhydroxyd, entsprechend einem für die Schadgaseinbindung notwendigen gewünschten Molverhältnis, C A/S zugegeben wird.

9. Verfahren nach Anspruch 6, dadurch gekennzeichnet, daß der kompaktierte Klärschlamm zum Einsatz als Brennstoff in Industriefeuerungen, wie Zement-, Asphaltanlagen sowie Rostfeuerungen zur Energieerzeugung, in Standard-Transport-Containern oder Big Bags verpackt der Feuerungsanlage zugeführt und unvermahlen oder vermahlen der Feuerung zugegeben wird.

10. Verfahren nach Anspruch 6, dadurch gekennzeichnet, daß der kompakte Klärschlamm zu Biogas vergast wird.

11. Verfahren nach Anspruch 10, dadurch gekennzeichnet, daß das Biogas verbrannt und zur Energieerzeugung für die Beheizung der Klärschlammtrocknung verwendet wird.

12. Verfahren nach Anspruch 6, dadurch gekennzeichnet, daß der kompaktierte Klärschlamm in Kohlekraftwerken mitverbrannt wird.

13. Vorrichtung zur Durchführung des Verfahrens nach den Ansprüchen 1 bis 12, gekennzeichnet durch folgende nacheinander angeordnete Anlagenteile:
a) einen Mischer (1) mit Rückführleitung (11) für getrockneten und gekühlten Klärschlamm;
b) einen indirekt beheizten Trockner (2) mit Leitung (15) zur Brüdenabführung;
c) einen als Kühlschnecke (6) ausgebildeten Kühler mit Leitung (16) vom Trockner (2) und Leitung (17) zu einem Bunker (7) mit zwei Auslässen (18, 19);
d) eine Kompaktierungsanlage (8) mit Zuführleitung (20) vom Anlaß (18) des Bunkers (7);
e) und den entsprechenden Verbindungsleitungen, wobei die Rückführleitung (11) vom Auslaß (19) des Bunkers (7) ausgeht.

14. Vorrichtung nach Anspruch 13, dadurch gekennzeichnet, daß die Brüdenleitung (15) zu einem Entstauber (3) mit Staubrückführung (26) zum Kühler (6) geführt ist.

15. Vorrichtung nach den Ansprüchen 13 und 14, dadurch gekennzeichnet, daß dem Entstauber (3) ein Kondensator (4) mit Wassereinspritzung (27) nachgeschaltet ist.

16. Vorrichtung nach Anspruch 13, dadurch gekennzeichnet, daß die Kompaktierungsanlage (8) als Brikettieranlage ausgebildet ist.

17. Vorrichtung nach Anspruch 16, dadurch gekennzeichnet, daß die Brikettieranlage aus einer Brikettwalze mit austauschbaren Walzwerkzeugen besteht.

18. Vorrichtung nach den Ansprüchen 13 bis 17, dadurch gekennzeichnet, daß der Brikettieranlage (8) mehrere Vorlagesilos (9a, 9b, 9c) für Additive mit Dosier- und Fördereinrichtungen (22 bis 24) zugeordnet sind.

## Claims

1. Process for the treatment of a sewage sludge which has been dewatered to form a thick slurry, which is mixed with a dried sewage sludge to obtain a mixing moisture of between 55% and 70% DS, and which is dried to obtain a final moisture of above 80% DS, characterised in that the sewage sludge, which is indirectly dried to obtain a fine granulate and which is removed from the drier at a temperature of between 100 and 135° C, is cooled to a temperature of below 90°C, preferably of below 70° C, and that subsequently the cooled sewage sludge is divided into two volume flows which can be specified in advance, one of which is fed to the thick slurry and the other of which is compacted and/or briquetted.

2. Process according to Claim 1, characterised in that one or more additive(s) are admixed with the volume flow which is to be compacted, before the compacting takes place.

3. Process according to Claim 1, characterised in that the vapours generated during the drying of the sewage sludge are dedusted with a small volume of false air, and the drier vapours from which the dust has been removed are fed to a condenser, in which the condensable proportion of water vapour is condensed by injecting water or thick slurry.

4. Process according to Claim 3, characterised in that dust which accrues during the dedusting is added to the dried sludge.

5. Process according to Claims 3 and 4, characterised in that the vapour condensate occurring in the sewage treatment plant and the uncondensable proportion of inert gas are fed to a deodorizing unit.

6. Process according to Claim 1, characterised in that the compacting and/or briquetting unit is operated with different moulds in order to produce objects of different shapes.

7. Process according to Claims 2 and 6, characterised in that, in order to use the compacted sewage sludge as a fertiliser, aggregates are added to the cooled sewage sludge prior to the briquetting / compacting operation, and that said aggregates contain N - , P - and K - components.

8. Process according to Claims 2 and 6, characterised in that, in order to use the compacted sewage sludge as one of the combustibles in a garbage incineration plant, calcium carbonate or calcium hydroxide is added to the cooled sewage sludge, in accordance with a desired mole ratio, C A/S, which is necessary for the capture of the gaseous pollutants.

9. Process according to Claim 6, characterised in that the compacted sewage sludge for use as a fuel in industrial furnaces, for example in cement and asphalt plants, and in grate firings for the generation of energy, is conveyed to the furnace packed in standard transport containers or Big Bags, and is fed into the furnace either comminuted or uncomminuted,

10. Process according to Claim 6, characterised in that the compact sewage sludge is gasified to form a fermentation gas.

11. Process according to Claim 10, characterised in that the fermentation gas is burned and is used to generate energy to heat the sewage sludge drying process.

12. Process according to Claim 6, characterised in that the compacted sewage sludge is used as one of the combustibles in coal-fired power stations.

13. Device to carry out the process according to Claims 1 to 12, characterised by the following system components which are positioned subsequent to one another:
a) a mixer (1) with a return pipe (11) for dried and cooled sewage sludge;
b) an indirectly heated drier (2) with a pipe (15) to carry off the vapours;
c) a cooler designed in the form of a cooling screw conveyor (6), with a pipe (16) from the drier (2) and a pipe (17) to a bunker (7) with two outlets (18, 19);
d) a compacting plant (8) with a feed line (20) from the outlet (18) of the bunker (7);
e) and the appropriate connection lines, whereby the return pipe (11) exits from the outlet (19) of the bunker (7).

14. Device according to Claim 13, characterised in that the vapour line (15) is led to a deduster (3) with dust return (26) to the cooler (6).

15. Device according to Claims 13 and 14, characterised in that a condenser (4) with water injection (27) is connected downstream of the deduster (3).

16. Device according to Claim 13, characterised in that the compacting plant (8) is designed in the form of a briquetting plant.

17. Device according to Claim 16, characterised in that the briquetting plant consists of a briquetting roller with exchangeable rolling tools.

18. Device according to Claims 13 to 17, characterised in that several feed silos (9a, 9b, 9c) for additives, with metering and conveying devices (22 to 24), are assigned to the briquetting plant (8).

## Revendications

1. Procédé de traitement de bornes de décantation épaisses après la séparation d'eau, qui sont mélangées avec des bornes de décantation séchées à une humidité de mélange entre 55 et 70 % de matière sèche et, qui sont séchées jusqu'à une humidité résiduelle de plus de 80 % de matière sèche, caractérisé en ce que les bornes de décantation transformées en granulés fins par séchage indirect et prélevées du sécheur avec une température comprise entre 100 et 135° C, sont refroidies à une température au-dessous de 90° C, de préférence, au-dessous de 70° C et les bornes de décantation refroidies sont ensuite divisées en deux débits masse prédéterminables, dont l'un est dirigé vers les bornes épaisses et l'autre est compacté et/ou briqueté.

2. Procédé selon la revendication **1**, caractérisé en ce qu'il est ajouté au débit masse à compacter, un ou plusieurs additifs, avant le compactage.

3. Procédé selon la revendication **1**, caractérisé en ce que les buées produites en cours du séchage des bornes de décantation, sont dépoussiérées avec un petit débit d'air parasite, et les buées dépoussiérées du sécheur sont dirigées vers un condenseur où la teneur en vapeur d'eau condensable est condensée par l'injection d'eau ou de bornes épaisses.

4. Procédé selon la revendication **3**, caractérisé en ce que les poussières résultant du dépoussiérage sont ajoutées aux bornes séchées.

5. Procédé selon les revendications **3** et **4**, caractérisé en ce que les buées condensées sont dirigées vers l'installation de clarification et la fraction de gaz inerte non condensable à une installation de désodorisation.

6. Procédé selon la revendication **1**, caractérisé en ce que l'installation de compactage et/ou de briquetage utilise différentes matrices pour la réalisation de différentes formes de produit.

7. Procédé selon les revendications **2** et **6**, caractérisé en ce qu'il est ajouté aux bornes de décantation refroidies, avant le briquetage/compactage des additifs contenant les composants N, P et K pour l'utilisation des bornes de décantation compactées comme produit fertilisant.

8. Procédé selon les revendications **2** et **6**, caractérisé en ce qu'il est ajouté aux bornes de décantation refroidies, du carbonate de calcium ou de l'hydroxyde de calcium dans un rapport molaire souhaité de CA/S nécessaire à l'absorption des gaz polluants, pour l'incinération des bornes de décantation compactées dans une installation d'incinération de déchets.

9. Procédé selon la revendication **6**, caractérisé en ce que les bornes de décantation compactées qui sont utilisées comme combustible dans des installations de chauffe industrielles pour la production d'énergie, comme les installations de production de ciment et d'asphalte et les foyers à grilles, sont transportées à l'installation de chauffe en conteneurs de transport standardisés ou en "Big Bags" et ajoutées au foyer soit sous forme non pulvérisée soit sous forme pulvérisée.

10. Procédé selon la revendication **6**, caractérisé en ce que les bornes de décantation compactées sont gazéifiées pour obtenir du biogaz.

11. Procédé selon la revendication **10**, caractérisé en ce que le biogaz est brûlé et utilisé pour la production d'énergie nécessaire au chauffage de l'installation de séchage des bornes de décantation.

12. Procédé selon la revendication **6**, caractérisé en ce que les bornes de décantation compactées sont brûlées dans des centrales thermiques au charbon.

13. Installation pour la réalisation du procédé selon les revendications **1** à **12**, caractérisée par les éléments successifs suivants :
a) un mélangeur (1) avec conduite de recyclage (11) des bornes de décantation séchées et refroidies ;
b) un sécheur (2) à chauffage indirect avec conduite (15) d'évacuation des buées;
c) un refroidisseur conçu comme refroidisseur hélicoïdal (6) avec conduite (16) du sécheur (2) et conduite (17) vers un silo (7) à deux sorties (18,19) ;
d) une installation de compactage (8) avec conduite d'alimentation (20) à partir de la sortie (18) du silo (7) ;
e) et les conduites de liaison correspondantes, la conduite de recyclage (11) partant de la sortie (19) du silo (7).

14. Installation selon la revendication **13**, caractérisée en ce que la conduite des buées (15) est reliée à un dépoussiéreur (3) avec recyclage des poussières (26) vers le refroidisseur (6).

15. Installation selon les revendications **13** et **14**, caractérisée en ce qu'un condenseur (4) avec injection d'eau (27) est monté en aval du dépoussiéreur (3).

16. Installation selon la revendication **13**, caractérisée en ce que l'installation de compactage (8) est conçue comme installation de briquetage.

17. Installation selon la revendication **16**, caractérisée en ce que l'installation de briquetage comporte un cylindre de briquetage avec des outils de cylindrage interchangeables.

18. Installation selon les revendications **13** à **17**, caractérisée en ce que plusieurs silos de stockage d'additifs (9a, 9b, 9c) avec installations de dosage et de transport (22 à 24) sont destinés à l'installation de briquetage (8).
